Europäisches Patentamt

**European Patent Office**

**Office européen des brevets**

(19)

(11) Publication number: **0 212 849**
A1

(12)

# EUROPEAN PATENT APPLICATION

(21) Application number: **86305525.7**

(22) Date of filing: **17.07.86**

(51) Int. Cl.⁴: **B 01 D 53/02**, B 01 D 53/34, G 21 F 9/02

(30) Priority: **23.07.85 GB 8518577**

(43) Date of publication of application: **04.03.87**
**Bulletin 87/10**

(84) Designated Contracting States: **BE DE FR GB IT NL**

(71) Applicant: **BP Chemicals Limited, Belgrave House 76 Buckingham Palace Road, London, SW1W 0SU (GB)**

(72) Inventor: **Pearce, Graeme Keith, BP Chemicals Limited Salt End, Hull HU12 8DS (GB)**

(74) Representative: **Krishnan, Suryanarayana Kalyana et al, BP INTERNATIONAL LIMITED Patents Division Chertsey Road, Sunbury-on-Thames Middlesex TW16 7LN (GB)**

(54) **Removal of methyl iodide from gas streams.**

(57) This invention relates to a process for the removal of methyl iodide from gas streams by selective pressure swing adsorption using a cuprous ion-exchanged zeolite of the FAU structure type. The process is particularly suitable for separating methyl iodide from mixtures thereof with physisorbed gases.

1

## REMOVAL OF METHYL IODIDE FROM GAS STREAMS

The present invention relates to a process for the removal of methyl iodide from gas streams by selective pressure swing adsorption using a cuprous ion-exchanged zeolite.

Methyl iodide is a highly toxic substance which must be removed from plant off gas streams in the chemical and nuclear industries. Present methods for removal of methyl iodide from such streams include liquid absorption by acetic acid or methanol, and solid adsorption with potassium iodide impregnated active carbon beds. Liquid absorption systems incur high costs due to energy usage and solvent loss, and the solid adsorption system suffers from regeneration difficulties.

It has now been found that methyl iodide may be selectively adsorbed from gas streams by a cuprous ion-exchanged zeolite and the adsorbed iodide can be recovered during vacuum regeneration of the zeolite.

Accordingly, the present invention is a process for selective adsorption and subsequent recovery of methyl iodide from a gaseous mixture by passing the mixture over a zeolite ion-exchanged with cuprous ions characterised in that the zeolite has a faujasite type structure and has a silicon to aluminium atomic ratio from 1.2-3.

Zeolites of the faujasite type are described in standard texts including "Zeolite Molecular Sieves, Structure, Chemistry and Use" by Breck, D.W., pp 92/93, published by John Wiley & Sons Inc. (1974) and in "Molecular Sieve Zeolites-1", Advances in Chemistry Series 101, edited by Gould, R.F., pp 171 et seq. and published by the

1

American Chemical Society (1971). These zeolites are classified to have an FAU-type structure as characterised by their X-ray diffraction pattern and listed in the book by Meier, W.M. and Olsen, D.H. entitled, "Atlas of Zeolite Structure Types", p 37, published by the Structure Commission of the International Zeolite Association (1978) and distributed by Polycrystal Book Service, Pittsburgh, Pa., USA.

Examples of the zeolites of the FAU-structure type that may be used include zeolites X and Y provided that they have a silicon to aluminium atomic ratio from 1.2 to 3. Zeolites having a silicon to aluminium ratio from 1.5-3, especially those having a ratio from 2 to 3, eg zeolite Y are preferred.

The zeolites used may be ion exchanged with cupric ions by any of the conventional techniques. For instance, a NaY zeolite may be exchanged initially by treatment with a cupric nitrate solution, washed, dried. The cupric ion exchanged zeolite is preferably granulated e.g. with colloidal silica and then dried prior to contact with the gaseous mixture comprising methyl iodide. The dried granulated zeolite containing cupric ions is then reduced to cuprous ion exchanged zeolite by passing carbon monoxide therethrough at elevated temperature. The resultant cuprous ion exchanged zeolite having a silicon to aluminium atomic ratio from 1.5 to 3 (hereafter termed "Cu(I)Y") is used for the selective adsorption of methyl iodide from gaseous mixtures.

The ion-exchanged zeolites used in the present invention are capable of adsorbing gases either by chemisorption or by physisorption. In chemisorption the adsorbed gases are chemically bound to active sites on the zeolite whereas in physisorption the gases are only adsorbed physically in the pores and interstices of the zeolite. The process of the present invention is particularly suited for separating methyl iodide which is chemisorbed from gases capable only of physisorption e.g. hydrogen, argon, nitrogen and the lower paraffinic gases such as methane, ethane and propane.

The selective adsorption is suitably carried out by passing the gaseous mixture containing methyl iodide over the cuprous ion-exchanged zeolite at ambient temperature eg 20°C and pressure eg 1 bar absolute. The adsorbed methyl iodide may be recovered and the cuprous ion-exchanged zeolite regenerated by applying a low vacuum e.g. 2 mbar absolute at ambient temperature. For instance, using Cu(I)Y with a silicon to aluminium atomic ratio of 2.4, methyl iodide was adsorbed from a mixture thereof with nitrogen (55% and 45% v/v respectively) at 20°C and 1 bar absolute. The adsorption capacity for methyl iodide in this case was 1.4 moles of methyl iodide per mole of cuprous cation on an unused zeolite.

A cycle of adsorption followed by the regeneration of the zeolite and recovery of methyl iodide can be carried out from pressures of 0.1 mbar absolute to 1 bar absolute, preferably 1 mbar absolute to 10 mbar absolute either by application of a vacuum or by reducing the methyl iodide partial pressure by use of a gas purge. The loading on the zeolite increases with the partial pressure of the adsorbed component. The maximum adsorption capacity for methyl iodide corresponds to 1.4 mole of methyl iodide for every mole of cuprous ion exchanged onto the zeolite. Desorption occurs as the partial pressure of methyl iodide is reduced. Below 10m bar absolute, the desorption rate becomes very slow.

Adsorption can be carried out in the temperature range -80°C to +250°C, preferably -50°C to +150°C. Loading is increased at lower temperatures whilst moderate adsorption and desorption rates are maintained.

It is preferable that the gaseous mixture being treated does not contain any combination of moisture and an oxidising agent such as moist air because of the risk of cuprous ions in the zeolite being oxidised to cupric ions.

The present invention is further illustrated with reference to the following Examples.

EXAMPLES

Details of Preparation of Cuprous Ion-Exchanged Zeolite

(a)  Exchange

NaY zeolite which had a silicon to aluminium atomic ratio of 2.4 was exchanged with 0.2M $Cu(NO_3)_2$ at a concentration of 40 ml/gm of zeolite. The zeolite was filtered off, washed with water and dried. Analysis of this zeolite indicated that 60% of the Na+ cation had been exchanged, giving a zeolite with 8.0%w/w copper.

(b) Granulation

The cupric ion-exchanged zeolite Y (hereafter termed "Cu(II)Y") produced in (a) above was granulated with colloidal silica by mixing in the following proportions; 7 gm Cu(II)Y, 10 gm water, 8 gm Ludox (Regd. Trade Mark) AS40 40% colloidal silica with the pH adjusted to 6 with M $HNO_3$. This mixture was slurried, dried at 100°C, and broken up on a 1 mm sieve to give granules of 1 to 1.5 mm. The silica content of the granules was 30% w/w. (Capacities are quoted on the basis of the total weight of zeolite plus binder).

(c) Reduction

10 g of the granulated Cu(II)Y produced in (b) above was pre-dried in a stream of $N_2$ at 450°C with a flowrate of 30 ml/min for 6 hours. CO was then passed through the zeolite granules at the same flowrate for at least 3 hours with a temperature of 450°C and at a pressure of 1.4 to 2 bar absolute to form the cuprous ion-exchanged zeolite Y (hereafter termed "Cu(I)Y") which was used in the following Examples.

Example 1

A methyl iodide/nitrogen feed mixture was obtained by bubbling nitrogen through a vessel containing liquid methyl iodide. The feed was analysed by gas chromatography (GC) and was found to contain 55% v/v methyl iodide. The feed was passed through a packed bed containing 8.1 gm of Cu(I)Y 1 mm granules. The reject stream from the bed was analysed by GC at 10 minutes time intervals until breakthrough occurred, at which point the methyl iodide composition rose substantially. The outlet flow from the bed was measured at regular intervals using a bubble meter.

After the adsorption cycle, the feed flow was stopped and the bed regenerated under vacuum.

Results

Run conditions are summarised in Table 1, and capacity and breakthrough data are given in Tables 2 and 3. The results show that the methyl iodide is adsorbed at a high capacity by the Cu(I)Y corresponding to 1.4 moles methyl iodide per mole of Cu(I) cation for the unused zeolite. An extended vacuum regeneration of 2 mbar A for 60 minutes recovers approximately 35% of the capacity whilst retaining good mass transfer characteristics in the next adsorption cycle. Less rigorous vacuum regneration conditions of 10 mbar A for 20 minutes recover only 15% of the capacity and lead to premature breakthrough in the subsequent adsorption cycle. Methyl iodide bonding is therefore strong but the Cu(I)Y can be sufficiently regenerated by vacuum to give highly selective methyl iodide removal from an inert gas stream using a pressure swing cycle. In a process application, the reject gas from the cycle could then be safely vented, and the vacuum regeneration product could be recycled.

An improvement in the methyl iodide specification of the reject gas could be obtained by:-

(a) reducing the methyl iodide content of the feed.

(b) increasing the extent of the regeneration.

(c) increasing the feed gas temperature and/or feed gas pressure.

## TABLE 1

### Run Conditions

| Feed Composition | 55% v/v Methyl Iodide/45% v/v Nitrogen |
|---|---|
| Bed Weight | 8.1 gm Cu(I)Y |
| Bed Length | 175 mm |
| Bed Diameter | 15 mm |
| Temperature | 20°C |
| Outlet Flowrate of $N_2$ during adsorption | 15 ml/min |

## TABLE 2

### Methyl Iodide Adsorption Capacities

| Experiment | 1 | 2 | 3 |
|---|---|---|---|
| Regeneration Conditions in previous cycle | Unused Cu$^{(I)}$Y | 2 mbar A for 60 min | 10 mbar A for 20 min |
| Adsorption Capacity, ml/gm | 140 | 50 | 20 |

## TABLE 3

### Methyl Iodide Breakthrough

| Experiment | 1 | 2 | 3 |
|---|---|---|---|
| Time, minutes | % v/v Methyl Iodide in Reject Gas | | |
| 0 | 0.2 | 0.5 | 0.5 |
| 10 | 0.2 | 0.5 | 2.4 |
| 20 | 0.2 | 0.5 | 7.4 |
| 30 | 0.2 | 23.5 | 28.7 |
| 40 | 0.2 | 28.4 | 32.9 |
| 50 | 0.2 | 32.6 | 36.6 |
| 60 | 0.3 | | |
| 70 | 25.5 | | |
| 80 | 31.5 | | |
| 90 | 33.1 | | |
| 100 | 36.8 | | |

Claims:

1. A process for selective adsorption and subsequent recovery of methyl iodide from a gaseous mixture by passing the mixture over a zeolite ion-exchanged with cuprous ions characterised in that the zeolite has a faujasite type structure and has a silicon to aluminium atomic ratio from 1.2-3.

2. A process according to claim 1 wherein the zeolite has a silicon to aluminium atomic ratio of 1.5-3.

3. A process according to claim 1 or 2 wherein the zeolite is zeolite X or zeolite Y.

4. A process according to any one of the preceding claims wherein the cuprous ion exchanged zeolite is granulated with colloidal silica and then dried prior to contact with the gaseous mixture comprising methyl iodide.

5. A process according to any one of the preceding claims wherein the gaseous mixture comprises methyl iodide and one or more gases which are capable only of physisorption.

6. A process according to claim 5 wherein the gases in the mixture capable only of physisorption are selected from hydrogen, argon, nitrogen and the lower paraffinic gases.

7. A process according to any one of the preceding claims wherein a cycle of adsorption of methyl iodide from the gaseous mixture followed by regeneration of the zeolite and recovery of methyl iodide is carried out at a pressure from 0.1 mbar absolute to 1 bar absolute.

**8.** A process according to any one of the preceding claims wherein the adsorption of methyl iodide from the gaseous mixture is carried out at a temperature of −80°C to +250°C.

**9.** A process according to any one of the preceding claims wherein the gaseous mixture is free of a combination of moisture and an oxidising agent capable of oxidising the cuprous ions in the zeolite to cupric ions.

**10.** A process according to any one of the preceding claims as hereinbefore described with reference to the Examples.

0212849

European Patent
Office

**EUROPEAN SEARCH REPORT**

Application number

EP 86 30 5525

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 088 737 (T.R. THOMAS)<br><br>* Claims 1,2,5; column 2, lines 25-68 *<br><br>--- | 1,5,6, 8 | B 01 D 53/02<br>B 01 D 53/34<br>G 21 F 9/02 |
| A | US-A-3 497 462 (K.K. KRUERKE)<br>* Claims 1,4 *<br><br>----- | 1,3 | |

**TECHNICAL FIELDS SEARCHED (Int. Cl.4)**

B 01 D 53/00
G 21 F 9/00

The present search report has been drawn up for all claims

| Place of search | Date of completion of the search | Examiner |
|---|---|---|
| THE HAGUE | 06-11-1986 | POLESAK, H.F. |